# EUROPEAN PATENT SPECIFICATION

(11) **EP 3 419 407 B1**
(45) Date of publication and mention of the grant of the patent: **05.05.2021**
(21) Application number: 17756918.3
(22) Date of filing: 23.02.2017
(51) Int. Cl.: A01G 9/02

(54) **A MODULAR SYSTEM FOR CULTIVATING PLANTS ON A SUBSTANTIALLY VERTICAL PLANE, A CASSETTE ADAPTED TO BE ATTACHED TO WALL, AND A PLANT SUBSTRATE ADAPTED TO FIT IN A CASSETTE**
MODULARES SYSTEM ZUM KULTIVIEREN VON PFLANZEN AUF EINER IM WESENTLICHEN VERTIKALEN EBENE, KASSETTE ZUR BEFESTIGUNG AN DER WAND UND PFLANZENSUBSTRAT FÜR EINE KASSETTE
SYSTÈME MODULAIRE POUR CULTIVER DES PLANTES SUR UN PLAN SENSIBLEMENT VERTICAL, CASSETTE CONÇUE POUR ÊTRE FIXÉE À UN MUR, ET SUBSTRAT VÉGÉTAL CONÇU POUR SE LOGER DANS UNE CASSETTE

(30) Priority: 25.02.2016 SE 1600063
(43) Date of publication of application: 02.01.2019
(73) Proprietor: Vertical Plant System Sweden AB, Norrköping 60002 (SE)
(72) Inventor: Weister, Ola, Norrköping 60599 (SE)
(86) International application number: PCT/SE2017/000015
(87) International publication number: WO 2017/146628

(56) References cited:
- EP-A1- 1 367 334
- EP-A2- 0 337 085
- EP-A2- 1 500 883
- WO-A1-2010/045708
- WO-A1-2014/097660
- ES-A1- 2 393 571
- US-A1- 2013 227 884
- US-A1- 2014 096 446
- US-A1- 2015 289 452

## Description

### Introduction and problem description

The present invention relates to a modular system for plant walls and devices intended for building up these.

It is widely known that indoor living plants improve the air by oxygenation and humidification. In public buildings and offices, the air often feels heavy and deoxygenated. Moreover, the air is added with bacteria, viruses and odors and mismanaged ventilation system then spreads the bad air.

Another serious pollution in said environments is different VOC emissions (volatile organic compounds), such as benzene, xylene and formaldehyde, which are released from furniture, fabrics, paint and all kinds of building materials and appliances. Tests with real plants in workplaces have demonstrated lower sickness absence and demonstrably been able to influence symptoms such as fatigue, headaches and skin problems, and then we talk only about common plant arrangements.

Since there is a contradiction between the positive effects of having a plant arrangement and the surface that it occupies, the idea of exploiting the walls to place as many plants as possible in height, has emanated and thus enable the creation of larger culture units.

Most plant walls are passive, i.e. not purifying air from particles, etc., and are usually built up of fiber cloths, which are hung on the wall and with plants planted in pockets therein. Water is supplied from above and drops down, rather uncontrolled and provides the plants with humidity. These plant walls are decorative and oxygenate the air where they are installed, but they are not particularly beneficial from an overall health perspective. Next step in the development process is the active plant walls, where air is sucked from the room through the humus the plants are planted in, wherein the air will also be filtered from particles and surprisingly, also purified from harmful VOC gases by contact with organisms cooperating with the roots.

Difficulties with the active (and also the passive) plant walls are summarized below.
- They need, for practical reason, to be built in a modular way to enable a smooth construction of bigger plant walls or in general terms "culture units".
- The modules must be hung steadily on the wall and in the case of active plant walls, the rear side must be sealed from the surroundings and the fans must be installed to suck air through the plant wall, without a disturbing noise entering the room.
- Water must be supplied to the modules so that the plants get the right amount of water and fertilizer, without excessive evaporation causing problems. A passive plant wall as described above dries out very quickly, for example if irrigation fails, resulting in an active plant wall, through which air passes the humus, dries out even faster and must be built in a radically different way in order to retain humidity longer at a water pump failure.
- The irrigation system must be easy to install and check and must not include a lot of connections with a leakage risk.
- Water must also not accumulate in the lower part of the modules, but at the same time it is desirable that the capillary force is used as a retaining feature for the humidity in the humus. Unused water in a module has to be delivered to an underlying module without spillage.
- Special approaches must also be used to seal gaps between the modules, and to seal air leaks, partly to avoid additional air and partly for the wall to be perceived as aesthetically homogeneous in case the plants are small and newly planted.
- The humus in an active plant wall must have a sufficient rigidity and be self-supporting in order to keep the plants in place when and if they grow beyond all limits, so they do not fall down with roots and all. From now on we call the humus a plant substrate, preferably composed of an inert material, such as rock wool of a suitable density and stiffness.
- The substrate must be both moderately thick and dense so the roots will develop well, since it is around the roots the VOC gas purification takes place.
- The substrate must in some way be safely secured in the modules, which can be done in several ways. Best is some kind of hydrophilic metal plate frame basis.
- The hanging against the wall must allow a sufficient distance so that the flow rate of the air here will not be too high in order to enable an even suction over the whole plant wall surface.
- The number of fans and their type must be carefully considered against the desired flow, actual pressure drop, as well as appropriate outlet directions, so that the air in the entire room is cleaned.

### Related technology

The inventor has in a previous Swedish patent 99027476 disclosed the use of a modular system for building up an active plant wall for decoration, sound attenuation and air cleaning including other positive properties. The present invention is a result of a long chain of developments with gradual improvements and results from laboratory experiments in order to optimize function, performance, and serviceability, etc.

Other related technologies are found in US 2005/0055879 A1 and US 2012/0090232 A1, which from a practical perspective, however may be regarded as desktop products US 2015/0289452 A1 discloses a modular living green wall system. WO 2014/097660 A1 discloses a wall surface greening and atmosphere purification device.

The present invention solves the related problems by having the specified features stated in the main claims.

An embodiment of the invention and its air cleaning ability is shown in the below figures:

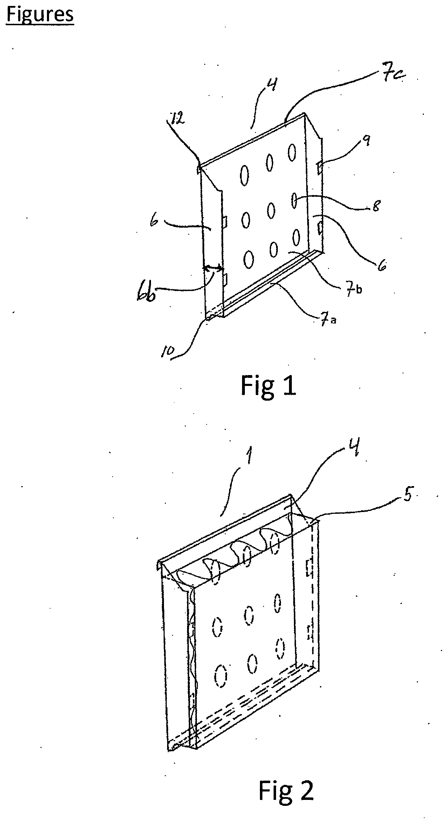

Figure 1; A cassette which is a fundamental building block of the modular system.
Figure 2; A cassette with a mounted plant substrate, forming a plant module.

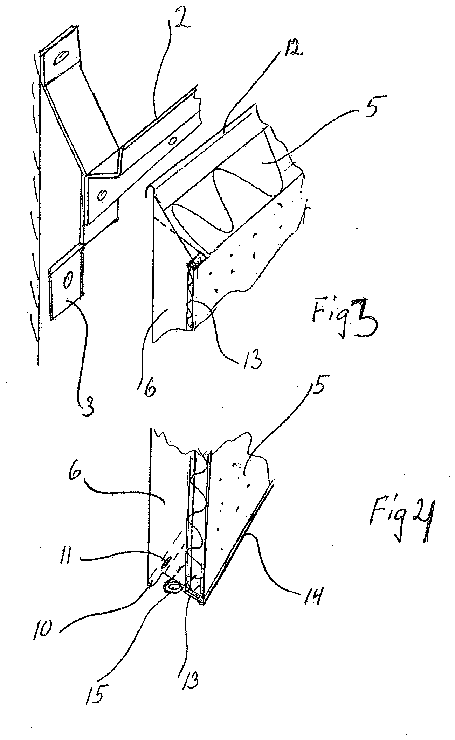

Figure 3; Plant module and its hanging.
Figure 4; Plant module, details.

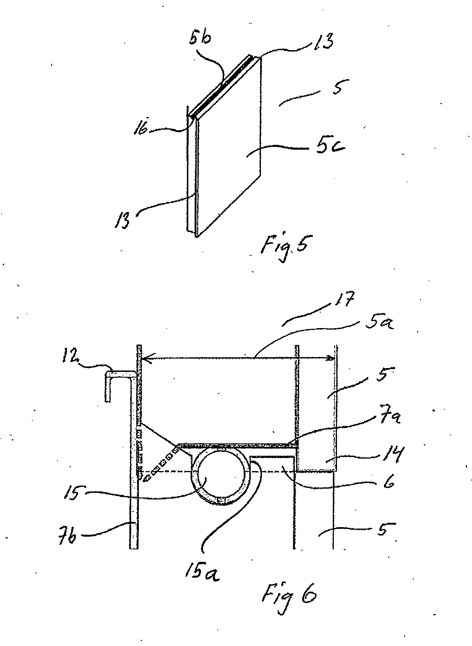

Figure 5; Plant substrate face with milled groove for perforated irrigation hose.
Figure 6; Detailed cross-section showing the principle of the plug connection between overlying and underlying plant modules.
Figure 7; Filtering of 1 micron particles over time and at different air speeds through the plant substrate.
Figure 8; Filtering of VOC gas (formaldehyde) over time and at different air speeds through the plant substrate.

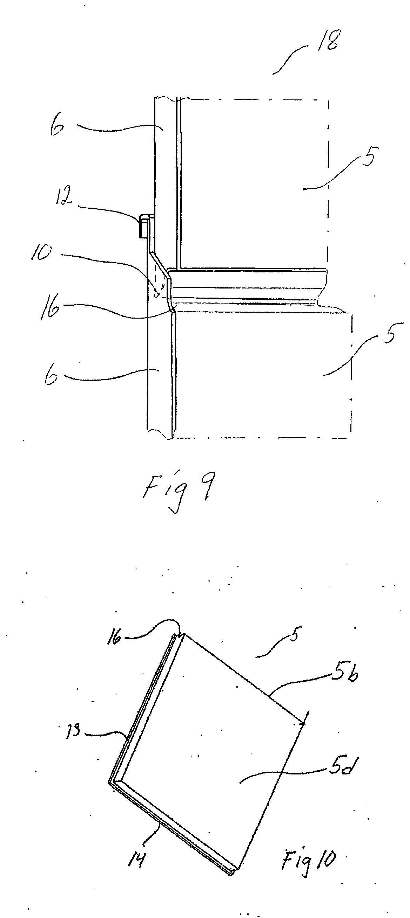

Figure 9: A cut showing a cassette inserted in an underlying cassette.
Figure 10; A plant substrate's back side showing a, to the top edge (5b), perpendicular protruding side edge as well as a protruding bottom edge, and also showing the remaining part of the side which is tapered downward.

### Origins of the invention

Extensive tests have preceded the present invention, primarily by the properties robustness, water leakage, particulate removal and VOC-gas purification, made possible by the use of active plant walls. In the first place an extremely low pressure drop over the plants was found in a fully developed plant wall with cassettes of the invention. This is positive from an energy point of view and implies that silent fans can be used.

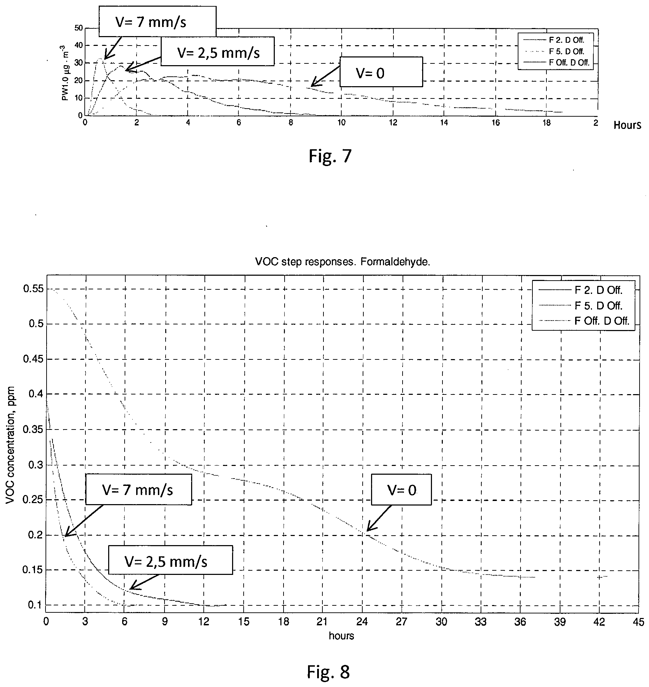

Surprisingly, particle filtration was very good already such a low average flow rate as 7 mm / s, Figure 7, through the plant substrate. The real surprise, however, was how effective VOC gas cleaning was, already at such a low speed as 2.5 mm / s, Figure 8.

In practice, the practically useful air speed, for use in the plant modules, is in the range 3-100 mm/s. A close cooperation with an innovative sheet metal company had great importance for the final design of the plant modules.

### Description of the invention

A modular active plant wall / culture unit according to the invention for growing plants on a substantially vertical surface or plane, is built up of plant modules, side by side and row after row suspended on, for instance, a wall by space-forming fastener, to allow air between the wall and the plant modules to flow in all directions.

A "substantially vertical surface" should be interpreted as a surface diverging from the vertical line up to 45 degrees, since there exist houses with sloping frontal walls, etc. A plant module consists of a firm cassette, for example made of bent sheet material, and a therein inserted plant substrate.

The cassettes have a variety of built-in features such as side support and bottom support and a back side provided with holes through which air can be sucked through the plant substrate. The cassettes have also folded tongues which prevent the plant substrate to move forward through the tongues fit into, for the purpose, sawn vertical grooves in the plant substrate.

Further, in the bottom of the cassettes, a drainage trough is situated for collecting excessive water, and through bottom holes guide the water down into the underlying plant module. At the top (7c) of the cassettes' back side there is a backward folded hanging rim that fits in the above mentioned fasteners.

The depth (6b) of the cassettes' side and bottom supports is about 75% of the thickness (5a) of the plant substrates, whereby the remaining thickness can shoot over a few mm to the sides and bottom in order to seal against around placed plant modules and thereby forming humidity bridges and prevent air seeping through the slots, as well as provide a homogeneous impression before the plants cover the entire surface.

The plant substrate must in a humid condition have a sufficient bending stiffness so, the plants' by their weight, are not pulled out of the cassette and onto the floor. Adequate bending stiffness is normally obtained at about 55 mm thickness of the plant substrate. For safety reasons, additional anchor of plant modules with large heavy plants ought to be done.

When building up a plant wall / culture unit, it is suitable to first mount the bottom row of plant modules, then an irrigation hose with holes placed horizontally in the dedicated milled grooves in all plant substrates in the row.

In the next stage the overlying row of plant modules is mounted at which the irrigation hose is "pinched" between the overlying plant module's bottom support and the milled groove in the underlying plant substrate and a humidity bridge is simultaneously formed between the plant substrates vertically.

Another finesse is built into the cassettes, in the way that the cassettes in the bottom is a few millimeters narrower than the top (7c), so an overhead plant module can be pushed, one or a few centimeters, into the underlying and thereby form a leakage proof "pipe sleeve".

With plant modules according to the invention, it is possible to build both passive and active plant walls, but the methodology will be at its best in the latter alternative, where the air is not only humidified and oxygenated, but also purified of particles and VOC emissions.

In order to achieve an active plant wall, space-forming fasteners are used against the wall so that an adequately deep space is formed behind the plant modules. The space is then sealed by appropriate means, so that a sealed chamber is formed, which by suction or blowing fans communicates with the outside air, enabling air to flow through the plant substrate in either direction. For larger plant walls it is an advantage if not the entire plant wall is active, for example the plant modules can, at the sides and/or top and/or bottom, be passive and then hide the fans and irrigation equipment for easy monitoring and service. Also sound attenuation means are suitable to place here.

We will now address the methodology to cultivate and optimize the positive impact of the plant wall on the surrounding air. We have seen above that it is possible to let the air flow through the plant substrate to the sealed chamber, or from the same. It is recommended to let the air flow toward the chamber, because the stomata on the leaf, which emit oxygen, close if direct hit by a continuous stream of air. The average air speed through the plant substrate should rather be below 0.1 m / sec than above. The plants need water, light and nutrient solution in order to flourish and, as mentioned earlier above, every plant module is, from above, fed with nutrients dissolved in water, by means of a perforated hose, because the capillary is not able to suck a sufficient amount of water if fed from below at the preferred plant module sizes. The hydrophilic surfaces of the cassettes help to prevent evaporation and also retain water and maintain local capillary water distribution. It may sometimes be necessary, in center of a plant module, to push water holding "wedges" into the plant substrate just under a water-intensive plant variety. Plant-roots are a "consumable", which must be constantly renewed and they are seeking primarily towards the more humid areas of the plant substrate. Other roots need access to air to develop a so-called Rhizoshere layer around them, taking care of any present VOC gases flowing through the plant substrate. By varying the size of the holes on back side of the cassettes, we can vary the size-relationship between humid and less humid and air rich zones, where the different root systems themselves can find their ideal environment.

### Detailed description of the invention

A modular plant wall according to the invention is built up of plant modules 1, which are suspended side by side for example on horizontal rails 2 fixed to a wall or a plane by space forming fasteners 3, which allows air, between the wall and the plant modules 1, to flow in all directions. A plant module 1 consists of a cassette 4, for example made of bent sheet, and a therein inserted and fixed plant substrate 5. The cassettes 4 have a variety of built-in features such as side supports 6 and bottom support 7a and a back side 7b provided with one or more holes 8 through which air can be sucked or pressed through the plant substrate. The area ratio of the holes 8 to the whole back side 7b of the plant module 1, is in the range 5-40%, which results that the plant substrate 5 forms zones with different humid content and air speed (even in a passive plant module there is some small air exchange), so that different root system of the plants can find optimal environments for their growth processes. The cassettes 4 have further folded tongues 9 that secure the plant substrate 5 from moving forward by the tongues fit in, for this purpose, sawn vertical grooves.

Further, in the bottom of the cassettes a drainage trough 10 is situated in order to collect excess water and to divert it, by the bottom holes 11, into the underlying plant module. At the top of the cassettes 4 back side 7b is a backward folded hanging rim 12 that fits in the above mentioned horizontal rails. The depth (6b) of the side and bottom supports 6,7a of the cassettes, is about 75% of plant substrate's 5 thickness, wherein its remaining thickness form, to the top side perpendicular, protruding edges a few mm to the sides 13 and bottom 14 in order to seal against around positioned plant modules and thereby transfer humidity and vertically and prevent air seeping through the slots, as well as to provide a homogeneous appearance before the plants cover the entire surface. The plant substrate 5 must in a humid condition have a sufficient bending stiffness, so the plants by their own weight, are not pulled out of the cassette 4 and falling down. A sufficient bending stiffness is typically obtained with a 55 mm thickness in a plant substrate 5 made of rock wool with a density around 0.1 g / cm3. For safety reasons, additional anchoring ought to be made for plant modules with large and heavy plants.

When building up a plant wall, it is first necessary to mount the bottom line of plant modules 1, after which a perforated irrigation hose 15 is placed horizontally in the appropriate milled grooves 16 in all plant substrates 5 in the row. In the following step the next overhead line is mounted, wherein the irrigation hose 15 is "pinched" between the bottom support 7a and the groove 16 and a humid bridge 17 is formed between the plant substrates 5 in the vertical direction. It is in this context appropriate that the sides 6 of the cassettes have a notch for the irrigation hose 15 and that this notch is slightly higher than the bottom of the groove 16 in the plant substrate 5, which prevents water from running over the edge. A further finesse is built into the cassettes, so that their bottom is a few millimeters narrower than the top side, so an overhead plant module 1 can be pushed into one or a few centimeters into the underlying 18 and thus forms a leakage proof "pipe sleeve" for downward running excess water. The side-overhang 13 of the plant substrate, are not tapered but follows the vertical line and forms here a humidity bridge sideways, while air is prevented to sneak by.

With plant modules according to the invention, it is possible to build both passive and active plant walls, but the methodology will be at its best in the latter case, where the air is not only humidified and oxygenated, but also purified of particles and VOC emissions.

In order to create an active plant wall, wall space achieving fasteners 2, 3 are used so that an appropriate deep space is created between the plant modules' back side and the rear wall. The space is then sealed by appropriate means, so that at least one sealed chamber is formed, which by suction or blowing fans communicates with the outside air, whereby the air can be made to flow through the plant substrate 5 in either direction. For larger plant walls it is an advantage if not the entire plant wall is active, for example plant modules can at the sides and /or top and /or bottom be passive, and then hide fans and irrigation equipment for easy monitoring and service. Also sound attenuation traps for fan noise is appropriate to place here.

Material for the cassettes could be molded fiber-filled plastic, but because of the size the tool cost is high, which means that the series must be counted in the thousands to compete with a rational punched and bent metal cassette. The sheet cassette is furthermore recyclable, which is a selling point in this context. By using aluminum sheet material in the cassettes, the strain on the wall is kept down at a "plastic level", compared with heavier steel materials, as well as transportations and assembly work also becomes more efficient. Former plant walls have shown that water has an incredible ability to run where you do not want it to, which was the origin of the idea of inserting an upper cassette in a bottom one, similar to a pipe in a pipe sleeve, in order to overcome the problem. Thanks to the fact that the metal plate fabrication technology and its software has been developed in order to take back market shares from the plastics industry, it was possible to achieve the "pipe sleeve" solution for metal sheet cassettes.

## Claims

1. A modular system for cultivating plants on a substantially vertical plane and in this way build a culture unit, including plant modules (1) consisting of cassettes (4), and therein fixed plant substrates (5) and provided with a hanging rim (12) to be attached to for example a wall or a plane with space-forming fasteners (2,3), and whose back sides are completely or partly sealed against the environment and the sealed area(s) connected to one or more fans forcing the air to flow through the in the "fan influenced" cassettes (4) fixed plant substrates (5) with the plants therein and their root systems, in either direction, and thereby be cleaned from particulates and volatile organic compounds emissions, where the cassettes (4) have a reduced width in their lower part in relation to their upper part such that they can be inserted into the underlying plant module's cassette (4) and form a water leak-proof coupling (17, 18) downwards in the culture unit, **CHARACTERIZED in that** the cassettes' (4) back side (7b) is provided with one or several holes (8) for the through-flowing air, whose area ratio of the cassettes' (4) entire back side (7b) is in the range 5-40%, which enables that it in the plant substrate (5) zones are formed with different humidity and air velocity so the plants different root systems can find optimal environments for their growth processes.

2. A modular system according to claim 1, wherein the one or more fans are selected or controlled so that the average air velocity through the plant substrate (5) is in the range of 3-100 mm/s.

3. A modular system according to any of the above claims where the plant substrate (5), on a front part of its depth (5a), has side edges (13) perpendicular to the substrate top edge (5b), which sidewise expand out (13) from the cassette (4) on both sides (6) of the cassette (4) which have a reduced width in the bottom compared with the top width, and the plant substrate (5) has a protruding edge (14) downwards outside a bottom support (7a) of the cassette (4) and in this way a homogeneous front (5c) is ensured, where contact is obtained between the plant substrates (5), horizontally and vertically in order to retain humidity and also prevent air from flowing between plant modules (1).

4. A modular system according to any of the above claims where water-holding plates are pushed into the plant substrate (5) in areas where the plants, for some reason, do not get enough water.

5. A cassette (4) for a modular system according to claim 1, with a hanging rim (12), adapted to be attached, for example, to a wall or a plane with distance achieving fasteners (2,3), adapted to comprise and fix a plant substrate (5) and thereby form a plant module (1) as a building block for the set up of a modular culture unit, where the cassette (4) has a reduced width at its bottom compared with its top, so that it can be inserted in the cassette (4) of the underlying plant module (1) and create a leak-proof coupling of water flowing downwardly in the culture unit, **CHARACTERIZED in that** the cassette's (4) back side (7b) are provided with one or several holes (8) for the through-flowing air, whose area ratio of the entire back side (7b) is in the range 5-40%, which enables that in the plant substrate (5) zones are formed with different humidity and air velocity so that the different root systems of the plants can find optimal environments for their growth processes.

6. A cassette (4) according to claim 5, wherein the cassettes (4) are made from sheet material with hydrophilic water-holding properties.

7. A cassette (4) according to claim 5 to 6, where the cassettes (4) are made from a single cut and bent metal sheet.

8. A plant substrate (5) adapted to fit into a cassette (4) according to claim 5, **CHARACTERIZED in that** the plant substrate (5), on a front part of its depth (5a) has side edges (13) perpendicular to the substrate top edge (5b), which are adapted to go somewhat outside the cassette (4) on both sides (6) of the cassette (4) which has a reduced width in the bottom, compared with the top, and that the plant substrate (5) also has an overhanging edge (14) downwards and outside a bottom support (7a) of the cassette (4) and in this way ensure a homogeneous front (5c) where contact is obtained between the plant substrates (5) mounted in nearby cassettes (4), horizontally and vertically, thereby retaining humidity and also preventing air flow between the plant modules (1).

9. A plant substrate (5) according to claim 8, wherein a groove (16) is established in the plant substrates' upper side, in order to accommodate an irrigation hose (15) and hold it in place (17).

## Patentansprüche

1. Ein modulares System um Pflanzen auf einer im Wesentlichen vertikalen Ebene anzubauen und somit eine Zuchtanlage zu schaffen, hierzu gehören Pflanzmodule (1) aus Kassetten (4) und darin fixierte Pflanzsubstrate (5), mit einem Verankerungsrand (12) zur Befestigung an Abstandshaltern, die einen gewissen Abstand zur Ebene erzeugen, der Abstand ist vollständig oder teilweise gegenüber der Umwelt abgeschirmt und Der/Die versiegelte(n) Bereich(e) sind mit einem oder mehreren Lüftern verbunden, welche Luft in beide Richtungen durch die Pflanzsubstrate (5) mit den Pflanzen und dem Wurzelwerk drückt, die in den "lüfterbeeinflussten" Kassetten (4) befestigt sind, wodurch Partikel und Emissionen flüchtiger organischer Verbindungen abgeführt werden, wobei die Breite der Kassetten (4) ist im unteren Bereich im Verhältnis zum oberen Bereich verringert, sodass sie in die Kassette (4) des darunter liegenden Pflanzmoduls eingesetzt werden können und eine nach unten leckdichte Verbindung (17, 18) in der Zuchtanlage entsteht, **DADURCH GEKENZEICHNET,** dass die Rückseite (7b) der Kassetten (4) über mehrere Öffnungen (8) für die durchfließende Luft verfügt, deren Anteil an der gesamten Rückseite (7b) der Kassetten (4) sich im Bereich zwischen 5 % und 40 % bewegt, wodurch sich im Pflanzsubstrat (5) Zonen mit unterschiedlicher Feuchtigkeit und Luftstromgeschwindigkeit bilden können, sodass die verschiedenen Wurzelwerke der Pflanzen optimale Bedingungen für ihren Wachstumsprozess vorfinden.

2. Ein modulares System gemäß Anspruch 1, wobei der oder die Lüfter ausgewählt oder gesteuert werden, sodass die durchschnittliche Luftstromgeschwindigkeit durch das Pflanzsubstrat (5) zwischen 3 und 100 mm/s liegt.

3. Ein modulares System gemäß einem der vorhergehenden Ansprüche, wobei das Pflanzsubstrat (5) an der Vorderseite in Tiefenrichtung (5a) über Seitenkanten (13) verfügt, die parallel zur Oberkante des Substrats (5b) verlaufen, welche seitwärts (13) über beide Seiten (6) der Kassette (4) erweitern die untere Breite der Kassette (4) ist kleiner als die obere Breite und das Pflanzsubstrat (5) verfügt über eine überstehende Kante (14) nach unten, außerhalb einer unteren Stütze (7a) der Kassette (4)und auf diese Weise wird eine homogene Vorderseite (5c) gewährleistet, auf der horizontal und vertikal ein Kontakt zwischen den Pflanzsubstraten (5) gesichert ist, um Feuchtigkeit zurückzuhalten und darüber hinaus zu verhindern, dass Luft zwischen den Pflanzmodulen (1) hindurchfließt.

4. Ein modulares System gemäß einem der vorhergehenden Ansprüche, wobei in Bereichen, in denen die Pflanzen aus beliebigen Gründen nicht genug Wasser erhalten, wasserspeichernde Platten zwischen das Pflanzsubstrat (5) geschoben werden.

5. Eine Kassette (4) für ein modulares System gemäß Anspruch 1 mit einem hängenden Rand (12), der angepasst ist, um beispielsweise mit Abstandshaltern (2, 3) an eine Wand oder eine Ebene montiert zu werden, so ausgelegt, um ein Pflanzsubstrat (5) aufzunehmen, zu fixieren und somit ein Pflanzmodul (1) als Baustein für die Erstellung einer Zuchtanlage zu erzeugen, wo die Breite der Kassette (4) ist im unteren Bereich im Verhältnis zum oberen Bereich verringert, sodass sie in die Kassette (4) des darunter liegenden Pflanzmoduls (1) eingesetzt werden kann und eine nach unten leckdichte Verbindung in der Zuchtanlage entsteht, **DADURCH GEKENZEICHNET** dass die Rückseite (7b) der Kassette (4) über mehrere Öffnungen (8) für die durchfließende Luft verfügt, deren Anteil an der gesamten Rückseite (7b) sich im Bereich zwischen 5 % und 40 % bewegt, wodurch sich im Pflanzsubstrat (5) Zonen mit unterschiedlicher Feuchtigkeit und Luftstromgeschwindigkeit bilden können, sodass die verschiedenen Wurzelwerke der Pflanzen optimale Bedingungen für ihren jeweiligen Wachstumsprozess vorfinden.

6. Eine Kassette (4) gemäß Anspruch 5, wobei die Kassetten (4) aus Plattenmaterial mit hydrophilen, wasserspeichernden Eigenschaften bestehen.

7. Eine Kassette (4) gemäß Anspruch 5 und 6, wobei die Kassetten (4) aus einer einzelnen geschnittenen und gebogenen Metallplatte bestehen.

8. Ein Pflanzsubstrat (5), das für die Aufnahme in eine Kassette (4) angepasst ist, gemäß Anspruch 5. **DADURCH GEKENZEICHNET** dass es an der Vorderseite des Pflanzsubstrats (5) in Tiefenrichtung (5a) über Seitenkanten (13) verfügt, die parallel zur Oberkante des Substrats (5b) verlaufen, welche in einem gewissen Maß über beide Seiten (6) der Kassette (4) herausragt sodass die untere Breite der Kassette (4) ist kleiner als die obere Breite, das Pflanzsubstrat (5) verfügt ebenfalls über eine überstehende Kante (14) nach unten und außerhalb einer unteren Stütze (7a) der Kassette (4) und auf diese Weise wird eine homogene Vorderseite (5c) gewährleistet, auf der horizontal und vertikal ein Kontakt zwischen in benachbarten Kassetten (4) eingesetzten Pflanzsubstraten (5) hergestellt wird, um Feuchtigkeit zurückzuhalten und darüber hinaus zu verhindern, dass Luft zwischen den Pflanzmodulen (1) hindurchfließt.

9. Ein Pflanzsubstrat (5) gemäß Anspruch 8, wobei auf der Oberseite des Pflanzsubstrats (5b) eine Furche (16) eingezogen ist, um einen Bewässerungsschlauch (15) aufzunehmen und in Position zu halten (17).

## Revendications

1. Un système modulaire destiné à la culture de végétaux et disposé sur un plan essentiellement vertical de façon à constituer une unité de culture qui comprend des modules végétaux (1) composés de cassettes (4) dans lesquelles sont disposés des substrats végétaux (5) fixés à des dispositifs d'écartement par l'intermédiaire d'une monture d'ancrage (12) de façon à préserver une certaine distance avec le plan, l'espace résultant étant scellé partiellement ou complètement par l'environnement de façon à former des zones scellées reliées à un ou plusieurs ventilateurs destinés à forcer la circulation de l'air à travers les substrats végétaux (5), qui se composent des végétaux et de leurs racines et qui sont fixés aux cassettes (4), dans n'importe quelle direction afin de filtrer les particules et les émissions de composés organiques volatiles présents dans l'air, la partie inférieure des cassettes (4) étant plus étroite que leur partie supérieure pour permettre l'insertion de la cassette (4) dans le module végétal correspondant ainsi que la formation d'un assemblage étanche (17, 18) dans l'unité de culture, qui **EST CARACTÉRISÉE par le fait que** la partie dorsale (7b) des cassettes (4) présente un ou plusieurs orifices (8) destinés à la circulation de l'air et représentant entre 5 et 40 % de la surface totale de la partie dorsale (7b) des cassettes (4), ce qui permet la formation de plusieurs zones de substrat végétal (5) présentant diverses conditions d'humidité et vitesses de circulation d'air afin d'offrir des environnements propices à la croissance de différents types de racines.

2. Un système modulaire conforme à la revendication 1 dans lequel un ou plusieurs ventilateurs sont sélectionnés ou contrôlés de façon à maintenir la vitesse moyenne de l'air entre 3 et 100 mm/s lorsqu'il circule à travers le substrat végétal (5).

3. Un système modulaire conforme à n'importe laquelle des revendications susmentionnées dans lequel le substrat végétal (5) présente, sur une surface frontale égale à sa profondeur (5a), des bords latéraux (13) perpendiculaires à l'arête supérieure (5b) du substrat qui s'écartent latéralement (13) de la cassette (4) sur les deux côtés (6) de la cassette (4), la partie inférieure de cette dernière étant plus étroite que sa partie supérieure et le substrat végétal (5) présentant une extrémité saillante (14) sur sa face inférieure à l'extérieur du support inférieur (7a) de la cassette (4) de façon à obtenir une surface frontale homogène (5c) dans laquelle le contact entre les substrats végétaux (5) se produit horizontalement et verticalement d'une manière qui permet de retenir l'humidité tout en empêchant la circulation de l'air entre les modules végétaux (1).

4. Un système modulaire conforme à n'importe laquelle des revendications susmentionnées dans lequel des plaques de rétention d'eau sont insérées dans les zones du substrat végétal (5) dont les plantes manquent d'eau pour une quelconque raison.

5. Une cassette (4) destinée à un système modulaire conforme à la revendication 1 présentant une monture d'ancrage (12) adaptée à son installation sur un mur ou un plan, une certaine distance avec ce dernier étant assurée par l'intermédiaire de dispositifs de fixation (2, 3), ainsi qu'à l'accueil d'un substrat végétal (5) afin de former un module végétal (1), défini comme un bloc de construction dans le cadre de l'installation d'une unité de culture modulaire, la partie inférieure de ladite cassette (4) étant plus étroite que sa partie supérieure afin de permettre l'insertion de la cassette (4) dans le module végétal (1) correspondant et la formation d'un assemblage étanche dans l'unité de culture, celle-ci **ÉTANT CARACTÉRISÉE par le fait que** la partie dorsale (7b) des cassettes (4) présente un ou plusieurs orifices (8) destinés à la circulation de l'air et représentant entre 5 et 40 % de la surface totale de la partie dorsale (7b), ce qui permet la formation de plusieurs zones de substrat végétal (5) présentant diverses conditions d'humidité et vitesses de circulation d'air afin d'offrir des environnements propices à la croissance de différents types de racines.

6. Une cassette (4) conforme à la revendication 5 dans laquelle les cassettes (4) sont fabriquées à partir d'un matériau en feuilles présentant des propriétés hydrophiles de rétention d'eau.

7. Une cassette (4) conforme aux revendications 5 et 6 dans laquelle les cassettes (4) sont fabriquées d'une seule coupe à partir d'une feuille métallique pliée.

8. Un substrat végétal (5) adapté à une installation dans une cassette (4) conforme à la revendication 5 **CARACTÉRISÉ par le fait que** le substrat végétal (5) présente, sur une surface frontale égale à sa profondeur (5a), des bords latéraux (13) perpendiculaires à l'arête supérieure (5b) du substrat qui sont conçus pour s'écarter légèrement de la cassette (4) des deux côtés (6) de la cassette (4), la partie inférieure de cette dernière étant plus étroite que sa partie supérieure et le substrat végétal (5) présentant également une extrémité saillante (14) sur sa face inférieure à l'extérieur du support inférieur (7a) de la cassette (4) de façon à obtenir une surface frontale homogène (5c) dans laquelle le contact entre les substrats végétaux (5) installés dans les cassettes (4) adjacentes se produit horizontalement et verticalement d'une manière qui permet de retenir l'humidité tout en empêchant la circulation de l'air entre les modules végétaux (1).

9. Un substrat végétal (5) conforme à la revendication 8 dans lequel une rainure (16) est située sur la surface supérieure du substrat végétal (5b) en vue de l'installation d'une buse d'irrigation (15) et de son maintien (17).
